# EUROPÄISCHE PATENTSCHRIFT

(11) **EP 3 404 180 B1**
(45) Veröffentlichungstag und Bekanntmachung des Hinweises auf die Patenterteilung: **25.11.2020**
(21) Anmeldenummer: 18020114.7
(22) Anmeldetag: 27.03.2018
(51) Int. Cl.: E05D 3/18, E05D 11/10, B62K 3/00, B62K 15/00

(54) **SCHARNIERGELENK**
HINGE JOINT
ARTICULATION À CHARNIÈRE

(30) Priorität: 18.05.2017 DE 202017002673 U
(43) Veröffentlichungstag der Anmeldung: 21.11.2018
(73) Patentinhaber: Gossner, Anton, 86150 Augsburg (DE)
(72) Erfinder: Gossner, Anton, 86150 Augsburg (DE)
(74) Vertreter: Patentanwälte Munk

(56) Entgegenhaltungen:
- EP-A2- 1 142 778
- DE-U1- 20 103 178
- DE-U1- 29 901 184
- US-A1- 2001 030 405
- US-B1- 6 332 621

## Beschreibung

Die Erfindung betrifft ein Scharniergelenk zum Verbinden von zwei um eine Schwenkachse gegeneinander klappbaren Bauteilen, insbesondere eines Trittbretts und einer Längssäule eines Rollers, die mit ineinander eingreifenden Gelenkelementen versehen sind, welche durch einen sie durchgreifenden, die Schwenkachse bildenden Lagerbolzen schwenkbar aneinander angelenkt und durch ein zugeordnetes, manuell auslösbares Sperrschloss in zwei Endpositionen gegeneinander verriegelbar sind.

Bei bekannten Rollern oben genannter Art ist an der die Lenksäule aufnehmenden Lagerbüchse eine schräg nach unten gerichtete Strebe angebracht, die mit ihrem unteren Ende an einem trittbrettseitig vorgesehenen Lagerbock gelagert ist. Zur Bildung eines Sperrschlosses ist der genannte Lagerbock als zur Schwenkachse konzentrisches Kreissegment ausgebildet, das mit umfangsseitigen Rastkerben versehen ist, in die ein auf der schräg nach unten gerichteten Strebe der Lagerbüchse der Lenksäule federnd angeordnetes Sperrorgan einrastbar ist. Nachteilig dabei ist, dass im Fahrzustand auf die genannte Rastverbindung starke Momente wirken können, was dazu führen kann, dass die Rastkerben innerhalb kürzerer Zeit ausgeleiert werden, so dass die Gefahr besteht, dass das eingerastete Sperrorgan unbeabsichtigt ausrasten kann. Die bekannte Anordnung erweist sich daher als nicht sicher genug. Dieser Nachteil wird mit zunehmender Länge und Neigung der schräg nach unten gerichteten Strebe der Lagerbüchse der Lenksäule noch verstärkt. Ein weiterer Nachteil besteht darin, dass sich in Folge der vergleichsweise großen Länge der schräg nach unten gerichteten Strebe im zusammengeklappten Transportzustand ein vergleichsweise großer Abstand zwischen Lenksäule und Trittbrett ergibt, was zu einer sperrigen Anordnung führt, die viel Stauraum erfordert. Das Dokument US6332621 B1 offenbart alle Merkmale des Oberbegriffs des Anspruchs 1.

Hiervon ausgehend ist es die Aufgabe der vorliegenden Erfindung, eine Anordnung eingangs erwähnter Art mit einfachen und kostengünstigen Mitteln so zu verbessern, dass in der Fahrposition eine vergleichsweise hohe Sicherheit und in der Transportposition eine vergleichsweise kompakte Anordnung erreicht werden.

Diese Aufgabe wird erfindungsgemäß dadurch gelöst, dass bei dem Scharniergelenk eingangs erwähnter Art eines der beiden Gelenkelemente durch eine Laschenanordnung gebildet ist, die mit einem zur Schwenkachse konzentrischen Bogenschlitz versehen ist, in den ein schwenkachsparalleler Führungsstift des jeweils anderen Gelenkelements eingreift, und dass zur Bildung des Sperrschlosses ein auf der Laschenanordnung des einen Gelenkelements um eine schwenkachsparallele Kippachse schwenkbares Riegelelement vorgesehen ist, das ebenfalls einen zur Schwenkachse konzentrischen, mit dem Führungsstift zusammenwirkenden Bogenschlitz aufweist, der durch den Endpositionen der beiden gegeneinander klappbaren Bauteile zugeordnete, konzentrisch zur Kippachse des Riegelelements gebogene und bezüglich der Kippachse gleichsinnig gerichtete Fangtaschen verlängert ist und der mit einer entgegen dem Drehsinn der Fangtaschen wirksamen Einrückeinrichtung zusammenwirkt.

Die das eine Gelenkelement bildende Laschenanordnung kann in vorteilhafter Weise direkt an das zugeordnete Bauteil angesetzt sein, so dass die beiden Bauteile im zusammengeklappten Zustand nur wenig voneinander beabstandet sind, was eine kompakte Anordnung für den Transport ergibt. Das Riegelelement kann in vorteilhafter Weise so gestaltet sein, dass es zumindest in der der Fahrstellung zugeordneten Endposition momentfrei ist, d.h. keine der Einrückeinrichtung entgegenwirkende Kräfte auf es wirken, was eine hohe Sicherheit gewährleistet.

Vorteilhafte Ausgestaltungen und zweckmäßige Fortbildungen der übergeordneten Maßnahmen sind in den Unteransprüchen angegeben.

So können die Bogenschlitze der Laschenanordnung und des Riegelelements zweckmäßig so gestaltet sein, dass der Bogenwinkel des Bogenschlitzes der Laschenanordnung sowie des Bogenschlitzes des Riegelelements den Schwenkwinkel der beiden gegeneinander klappbaren Bauteile entspricht und dass eine durch die Kippachse des Riegelelements und den Führungsstift in jeder der beiden Endstellungen jeweils definierte Ebene senkrecht auf einer durch die Schwenkachse der beiden Gelenkelemente und die Achse des Führungsstifts definierten Ebene steht. Hierdurch ist sichergestellt, dass in der Fahrstellung der in die dieser zugeordnete Fangtasche des Bogenschlitzes des Riegelelements eingreifende Führungsstift und die Kippachse des Riegelelements so übereinander stehen, dass sich keine eine Verdrehung des Riegelelements entgegen der Wirkung der Einrückeinrichtung bewirkenden Kräfte ergeben können. In der zusammengeklappten Transportstellung befinden sich die Kippachse des Riegelelements und der in die entsprechende Fangtasche des Bogenschlitzes des Riegelelements eingreifende Führungsstift so nebeneinander, dass das Riegelelement ebenfalls momentfrei ist.

Vorteilhaft kann die das eine Gelenkelement bildende Laschenanordnung zwei parallele, von der Schwenkachse rechtwinklig gequerte Laschen aufweisen, zwischen welche das Riegelelement einsetzbar ist. Das andere Gelenkelement kann dabei zweckmäßig als Gabelanordnung ausgebildet sein, welche die Laschenanordnung umfasst und auf der der in die Bogenschlitze der Laschenanordnung und des Riegelelements eingreifende Führungsstift aufgenommen ist. Hierdurch ergibt sich eine sehr stabile, tragfähige Ausgestaltung des erfindungsgemäßen Scharniergelenks.

Zweckmäßig können bei einem Roller zur Bildung der Gelenkelemente die Laschenanordnung von einer den unteren Endbereich der Lenksäule aufnehmenden Lagerbüchse abstehen und der vordere Endbereich des Trittbretts als Gabelanordnung ausgebildet sein.

Eine weitere zweckmäßige Maßnahme kann darin bestehen, dass der Abstand der Schwenkachse und des Führungsstifts von der Oberseite des den Führungsstift enthaltenden Bauteils vorzugsweise des Trittbretts eines Rollers, dem Abstand der Schwenkachse von der zugewandten Oberfläche des den Bogenschlitz enthaltenden Bauteils, vorzugsweise der die Lenksäule eines Rollers aufnehmenden Lagerbüchse, entspricht. Diese Maßnahmen ermöglichen in vorteilhafter Weise eine praktisch abstandsfreie gegenseitige Annäherung der beiden Bauteile im zusammengeklappten Zustand und gewährleisten damit eine besonders hohe Kompaktheit, was die Gestaltung eines zum Transport der zusammengeklappten Anordnung dienenden Transportbehältnisses erleichtert.

Vorteilhaft kann die Einrückeinrichtung als am Riegelelement angreifende, auf der Laschenanordnung vorgesehene Einrückfeder, zweckmäßig in Form einer auf einem die Kippachse des Riegelelements bildenden Lagerstift aufgenommenen, vorzugsweise als Schenkelfeder ausgebildeten Torsionsfeder ausgebildet sein. Die Ausbildung der Einrückeinrichtung als Feder gewährleistet eine hohe Sicherheit. Zur Erleichterung der manuellen Auslösung des Riegelelements kann dieses einfach mit einem nach oben vorstehenden Betätigungselement versehen sein, so dass sich eine hohe Bedienungsfreundlichkeit ergibt.

Weitere vorteilhafte Ausgestaltungen und zweckmäßige Fortbildungen der übergeordneten Maßnahmen ergeben sich aus den restlichen Unteransprüchen sowie der nachstehenden Beispielsbeschreibung anhand der Zeichnung.

In der nachstehend beschriebenen Zeichnung zeigen:
- Figur 1: eine Seitenansicht eines erfindungsgemäßen Rollers in Fahrstellung,
- Figur 2: den Roller der Fig. 1 in der Transportstellung,
- Figur 3: den Roller der Fig. 1 und 2 im demontierten Zustand,
- Figur 4: eine Draufsicht auf die Gelenkelemente der Anordnung gemäß Fig. 3,
- Figur 5: die der Fahrstellung zugeordnete, untere Endstellung des Führungsstifts vor der Verriegelung,
- Figur 6: die Anordnung gemäß Fig. 5 nach der Verriegelung,
- Figur 7: die der Transportstellung zugeordnete, obere Endstellung des Führungsstifts vor der Verriegelung,
- Figur 8: die Anordnung gemäß Fig. 7 nach der Verriegelung und
- Figur 9: ein Beispiel für die Aufnahme des zusammengeklappten Rollers in einem Transportbehältnis.

Hauptanwendungsgebiet der Erfindung sind sogenannte Straßenroller, die sich als nichtmotorisches Fortbewegungsmittel insbesondere innerhalb geschlossener Ortschaften großer Beliebtheit erfreuen. Die Erfindung ist hierauf jedoch nicht beschränkt.

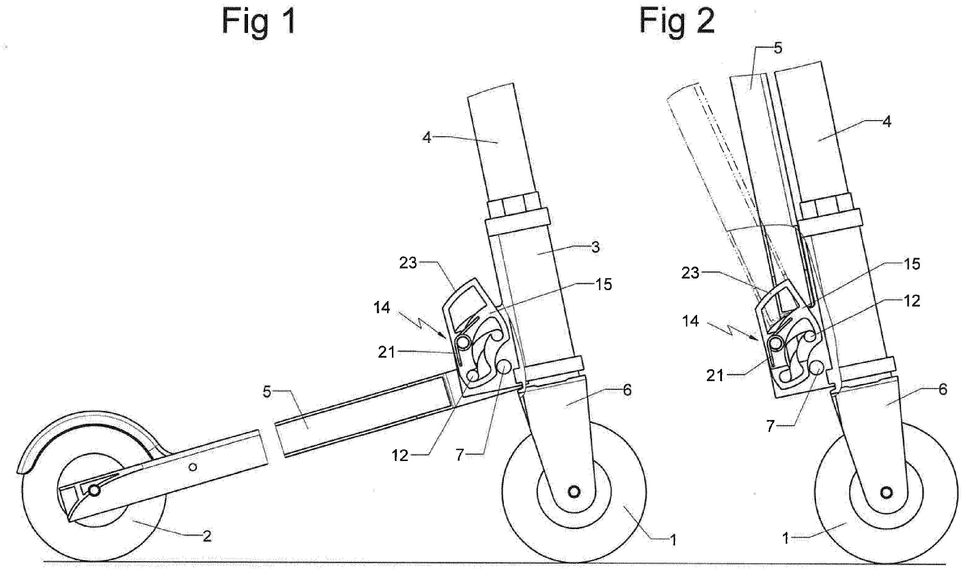

Der der Figur 1 zugrunde liegende Roller besitzt zwei Räder, 1, 2, eine mit ihrem unteren Endbereich in einer Lagerbüchse 3 aufgenommene Längssäule 4 und ein Trittbrett 5. Das vordere Rad 1 ist auf einem am unteren, aus der Lagerbüchse 3 herauskommenden Ende der Lenksäule 4 angebrachten Lagerbock 6 gelagert. Das hintere Rad 2 ist im Bereich des hinteren Endes des Trittbretts 5 gelagert. Dieses ist im Bereich seines vorderen Endes um eine horizontale Schwenkachse an der die Längssäule 4 aufnehmenden Lagerbüchse 3 klappbar angelenkt, wie durch einen die Schwenkachse bildenden Lagerbolzen 7 angedeutet ist. Hierdurch können das Trittbrett 5 und die Lenksäule 4 von der der Fig. 1 zugrunde liegenden Fahrstellung in die der Fig. 2 zugrunde liegende Transportstellung hochgeklappt werden, wobei das Trittbrett 5 mit minimaler Distanz parallel zur Längssäule 4 verläuft. Eine Zwischenstellung ist in Fig. 2 mit unterbrochenen Linien angedeutet.

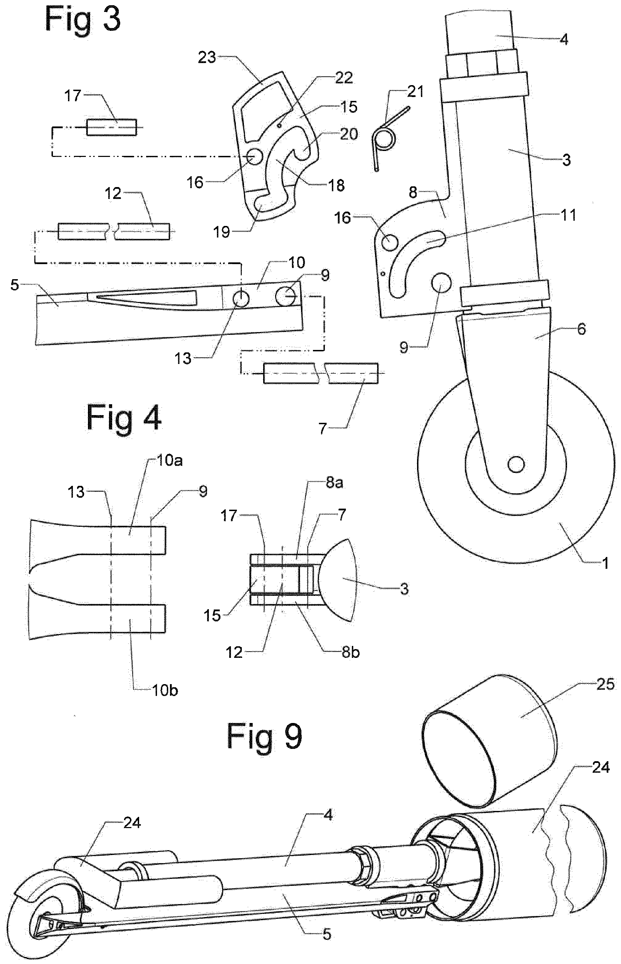

Zur Bildung der Gelenkverbindung sind die klappbar miteinander verbundenen Bauteile, hier die Längssäule 4 und das Trittbrett 5 mit einander zugewandten, in gegenseitigen Eingriff bringbaren Gelenkelementen versehen, die durch den die Schwenkachse enthaltenden Lagerbolzen 7 schwenkbar miteinander verbunden sind. Das der Lenksäule 4 zugeordnete Gelenkelement ist im dargestellten Beispiel, wie am besten aus Fig. 3 erkennbar ist, als von der das untere Ende der Lenksäule 4 aufnehmenden Lagerbüchse 3 radial abstehende Laschenanordnung 8 ausgebildet, die gemäß Fig. 4 zwei parallele, voneinander beabstandete Laschen 8a, b aufweist, die mit einer Querbohrung 9 für den sie rechtwinklig querenden Lagerbolzen 7 versehen sind. Das dem Trittbrett 5 zugeordnete Gelenkelement ist hier als an das vordere Ende des Trittbretts 5 angeformte Gabelanordnung 10 ausgebildet, die gemäß Fig. 4 zwei voneinander distanzierte Schenkel 10a, b aufweist, deren lichter Abstand dem Abstand der voneinander abgewandten Seiten der Laschenanordnung 8 zuzüglich Bewegungsspiel entspricht, so dass das durch die Laschenanordnung 8 gebildete Gelenkelement in das durch die Gabelanordnung 10 gebildete Gelenkelement eingefahren und von diesem außen umfasst werden kann. Das Gabelelement 10 ist ebenfalls mit einer Querbohrung 9 versehen, die in der Montagestellung mit der Querbohrung 9 der Laschenanordnung 8 fluchtet, so dass der Lagerbolzen 7 durch beide, durch die Laschenanordnung 8 und die Gabelanordnung 10 gebildeten Gelenkelemente durchsteckbar ist und diese schwenkbar verbindet.

Zur Begrenzung der Klappbewegung ist eines der Gelenkelemente, hier die Laschenanordnung 8, mit einer zur Querbohrung 9, also zur Schwenkachse konzentrischen Bogenschlitz 11 versehen, mit dem ein auf dem jeweils anderen Gelenkelement, hier der Gabelanordnung 10 vorgesehener Führungsstift 12 zusammenwirkt, d.h. im Eingriff ist. Hierzu ist das Gabelelement 10, wie aus den Figuren 3 und 4 entnehmbar ist, mit einer gegenüber der dem Lagerbolzen 7 zugeordneten Querbohrung 9 um die Größe des Radius des Bogenschlitzes 11 versetzten, schwenkachsparallelen Querbohrung 13 versehen, die in der Montagestellung in Deckung mit dem Bogenschlitz 11 der Laschenanordnung 8 kommt, so dass der Führungsstift 12 durchsteckbar ist, dessen Durchmesser der Weite des Bogenschlitzes 11 abzüglich eines Bewegungsspiels entspricht. In der Querbohrung 13 sitzt der Führungsstift 12 fest. Der den Bogenschlitz 11 der Laschenanordnung 8 durchsetzende Führungsstift 12 greift mit beiden Enden in die Schenkel 10 a, b der Gabelanordnung 10 ein, so dass sich eine stabile Abstützung ergibt. Dasselbe gilt für den Lagerbolzen 7. Der Bogenwinkel des Bogenschlitzes 11 der Laschenanordnung 8 entspricht dem Winkelabstand von Lenksäule 4 und Trittbrett 5 in der der Fig. 1 zugrunde liegenden Fahrstellung, so dass das Trittbrett 5 in die der Fig. 2 zugrunde liegende Transportstellung hochklappbar ist.

Um die beiden, gegeneinander klappbaren Bauteile, hier in Form der Lenksäule 4 und des Trittbretts 5 in den den Fig. 1 und 2 zugrunde liegenden Endstellungen sichern zu können, ist, wie aus den Fig. 1 und 2 ersichtlich ist, ein Sperrschloss 14 vorgesehen, das beim Erreichen jeder der beiden Endstellungen automatisch in seine Sperrstellung geht und zur Ermöglichung einer Klappbewegung manuell auslösbar ist. Das Sperrschloss 14 enthält ein aus den Fig. 1 - 3 ersichtliches Riegelelement 15, das einfach als aus Metall, zweckmäßig Leichtmetall bestehender Profilabschnitt herstellbar ist. Das Riegelelement 15 ist auf dem den Bogenschlitz 11 enthaltenden Gelenkelement, hier der Laschenanordnung 8, schwenkbar aufnehmbar. Hierzu wird das Riegelelement 15, wie in Fig. 4 angedeutet ist, zwischen den Laschen 8a, b der Laschenanordnung 8 platziert. Die Dicke des Riegelelements 15 entspricht daher dem lichten Laschenabstand abzüglich eines entsprechenden Laufspiels. Das Riegelelement 15 ist auf der Laschenanordnung 8 um eine zur Schwenkachse der beiden Gelenkelemente, also zur Achse des Lagerbolzens 7 parallele Achse schwenkbar angeordnet. Hierzu ist die Laschenanordnung 8 gemäß Fig. 3 mit einer schwenkachsparallelen, also zur Querbohrung 9 parallelen Querbohrung 16 versehen. Das Riegelelement 15 enthält eine entsprechende Querbohrung 16, so dass sich in der Montagestellung eine durchgehende Bohrung ergibt, durch die ein die Kippachse des Riegelelements 15 bildender Lagerstift 17 durchsteckbar ist, der das Riegelelement 15 durchgreift und mit seinen beiden Enden in die Laschen 8 a, b eingreift, so dass sich eine stabile Anordnung ergibt.

Das Riegelelement 15 ist, wie aus Fig. 3 weiter erkennbar ist, ebenfalls mit einem Bogenschlitz 18 versehen, der so angeordnet ist, dass er in der Montagestellung zur Deckung mit dem Bogenschlitz 11 der Laschenanordnung 8 kommt und dementsprechend ebenfalls von dem auf er Gabelanordnung 10 aufgenommenen, den Bogenschlitz 11 der Laschenanordnung 8 durchgreifenden Führungsstift 12 durchgriffen wird. Der Bogenschlitz 18 des Riegelelements 15 besitzt einen entsprechend der Krümmung des Bogenschlitzes 11 der Laschenanordnung 8 konzentrisch zur Schwenkachse der beiden Gelenkelemente, also zur Querbohrung 9 gekrümmten Mittelbereich und hieran an beiden Enden anschließende, konzentrisch zu seiner Kippachse, also konzentrisch zur Querbohrung 16 gekrümmte Verlängerungen zur Bildung von dem Führungsstift 12 in den Endstellungen zugeordneten Fangtaschen 19, 20. Die die Fangtaschen 19, 20 bildenden, konzentrisch zur Querbohrung 16 gebogenen Schlitzabschnitte schließen bezüglich der Kippachse, also bezüglich der Achse der Querbohrung 16 gleichsinnig an den mittleren Bereich des Bogenschlitzes 18 an und laufen dementsprechend gegenläufig vom Mittelbereich nach radial außen bzw. innen.

Dem Riegelelement 15 ist, wie auch aus den Figuren 1 und 2 ersichtlich ist, eine hier durch eine Feder 21 gebildete Einrückeinrichtung zugeordnet, durch die auf das Riegelelement 15 permanent ein Drehmoment ausgeübt wird, derart, dass der Führungsstift 12 beim Erreichen der den Figuren 1 bzw. 2 zugrunde liegenden Endstellungen vom jeweiligen Ende des Mittelbereichs des Bogenschlitzes 18 aus zum Eingriff mit den Fangtaschen 19 bzw. 20 kommt, wie in den Figuren 1 und 2 dargestellt ist. Die Bogenlänge des Mittelbereichs des Bogenschlitzes entspricht daher der Bogenlänge des Bogenschlitzes 11 der Laschenanordnung. Da die die Fangtaschen 19, 20 bildenden Schlitzabschnitte konzentrisch zur Kippachse des Riegelelements verlaufen, ergibt sich hierdurch praktisch keine Verlängerung der Bogenlänge des Mittelbereichs.

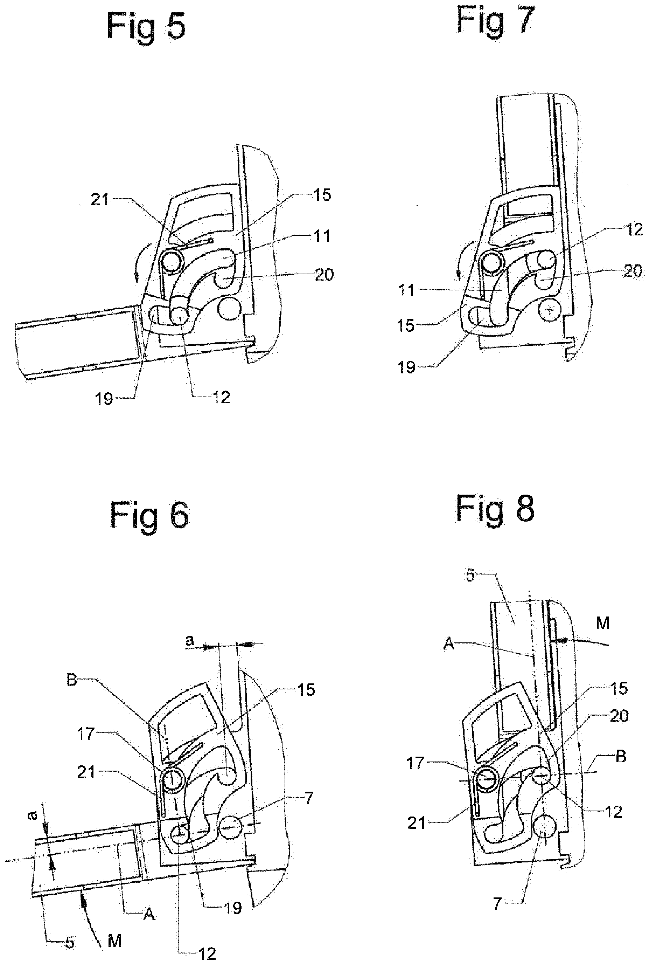

Beim Abklappen des Trittbretts 5 von der Transportstellung in die der Fig. 1 zugrunde liegende Fahrstellung läuft der Führungsstift 12 gemäß Fig. 5 zunächst am unteren Ende des Bogenschlitzes 11 der Laschenanordnung 8 und des gleichlangen Mittelbereichs des Bogenschlitzes 18 des Riegelelements 15 an. Wenn diese Stellung erreicht ist, wird das Riegelelement 15 durch die Wirkung der durch die Feder 21 gebildeten Einrückeinrichtung, wie durch einen Drehpfeil angedeutet ist, gegenläufig zum Drehsinn der Fangtaschen 19, 20 um ihre Kippachse verschwenkt, wobei das Riegelelement 15 in die der Fig. 6 zugrunde liegende Position kommt, in welcher der Führungsstift 12 in die an das untere Ende des Mittelbereichs des Bogenschlitzes 18 des Riegelelements 15 anschließende, untere Fangtasche 19 eingreift und an deren Ende mit der durch die Einrückeinrichtung erzeugten Vorspannung anliegt. Beim Erreichen der Fig. 2 zugrunde liegenden Transportstellung läuft der Führungsstift 12 gemäß Fig. 7 zunächst an das obere Ende des Bogenschlitzes 11 der Laschenanordnung 8 und des gleichlangen Mittelbereichs des Bogenschlitzes 18 des Riegelelements 15 an. Sobald diese Position erreicht ist, wird das Riegelelement 15 unter der Wirkung der Einrückeinrichtung gegensinnig zum Drehsinn der Fangtaschen 19, 20 verschwenkt, wie in Fig. 7 ebenfalls durch einen Drehpfeil angedeutet ist, wodurch der Führungsstift 12 (wie Fig. 8 zeigt) zum Eingriff an das obere Ende des Mittelbereichs des Bogenschlitzes 18 des Riegelelements 15 anschließende obere Fangtasche 20 des Riegelelements 15 kommt, und an deren Ende mit der durch die Einrückeinrichtung erzeugten Vorspannung anliegt.

Der Bogenschlitz 11 der Laschenanordnung 8 und der Bogenschlitz 18 einschließlich seiner die Fangtaschen 19, 20 bildenden Verlängerungen des Riegelelements 15 sind dabei zweckmäßig so gestaltet und bezüglich der Querbohrung 16, also bezüglich der Kippachse des Riegelelements 15 so angeordnet, dass sich die Achse des Führungsstifts 12 und die Kippachse des Riegelelements 15, also die Achse der dem Lagerstift 17 zugeordneten Querbohrung 16, in den den Fig. 6 und 8 zugrunde liegenden Endstellungen jeweils in einer zu einer die Schwenkachse der beiden Gelenkelemente und die Achse des Führungsstifts 12 enthaltenden Ebene A senkrechten Ebene B liegen. Der in den den Fig. 6 und 8 zugrunde liegenden Verriegelungsstellungen an den Enden der unteren, bzw. oberen Fangtasche 20 anliegende Führungsstift 12 befindet sich dementsprechend in der unteren Verriegelungsstellung gemäß Fig. 6 exakt unterhalb der Kippachse 17 des Verriegelungselements 15 und in der oberen Verriegelungsposition gemäß Fig. 8 exakt auf derselben Höhe wie die Kippachse 17 des Verriegelungselements 15, so dass ein in den Fig. 6 und 8 durch einen Pfeil M angedeutetes, auf das Trittbrett 5 ausgeübtes Klappmoment das Riegelelement 15 unbeeinflusst lässt, so dass dieses unter der Wirkung der Einrückeinrichtung zuverlässig in der jeweiligen Sperrposition bleibt und nicht zu einer Ausrückbewegung entgegen der Wirkung der durch die Feder 21 gebildeten Einrückeinrichtung veranlasst wird, was eine hohe Sicherheit gewährleistet. Der mit den Fangtaschen 19, 20 versehene Bogenschlitz 18 des Riegelelements ist hierzu so gelegt, dass die Zentren der Fangtaschen 19, 20 und die Kippachse des Riegelelements, also die Achse der dem Lagerstift 17 zugeordneten Querbohrung 16 einen rechten Winkel bilden.

Die Schwenkachse der beiden Gelenkelemente und der Führungsstift 17 sind so platziert, dass der in den Fig. 6 und 8 jeweils bei a angedeutete Abstand der vorstehend erwähnten, diese beiden Elemente enthaltenden Ebene von der Oberfläche des den Führungsstift 12 tragenden Bauteils, hier des Trittbretts 5 dem Abstand der Schwenkachse von der benachbarten Seite des anderen Bauteils, hier in Form der Lagerbüchse 3, entspricht, so dass in der Transportstellung eine äußerst kompakte Anordnung erreicht wird, wie aus Fig. 2 anschaulich erkennbar ist.

Die zweckmäßig die Einrückeinrichtung bildende Feder 21 ist im dargestellten Beispiel als durch eine Schenkelfeder gebildete Torsionsfeder ausgebildet, die auf dem die Kippachse des Riegelelements 15 bildenden Lagerstift 17 aufgenommen wird und mit ihren Schenkeln einerseits an einem in Fig. 3 gezeigten Anschlag 22 des Riegelelements 15 und andererseits an einem auf der den Lagerstift 17 aufnehmenden Laschenanordnung 8 vorgesehenen Anschlag 22 zur Anlage kommt, bzw. mit abgewinkelten Enden in die Anschläge 22 bildende Anschlagsbohrungen eingreift. Durch die die Einrückeinrichtung bildende Feder 21 wird das Riegelelement 15 permanent in Einrückrichtung vorgespannt. Die Ausrückbewegung kann manuell erfolgen. Hierzu ist das Riegelelement 15 mit einem hier als Öse ausgebildeten, nach oben vorspringenden, manuell erfassbaren Grifforgan 23 versehen.

Die oben erwähnte Kompaktheit des Rollers in der der Fig. 2 zugrunde liegenden, zusammengeklappten Stellung ermöglicht es, den zusammengeklappten Roller für Transportzwecke in einem vergleichsweise kompakten Transportbehälter zu verstauen. Dieser kann, wie aus Fig. 9 hervorgeht, als zylindrischer Köcher 24 ausgebildet sein, der mit einer abnehmbaren Verschlusskappe 25 versehen ist. Zur Erleichterung des Transports des Köders 24 kann dieser mit mindestens einem Tragegurt versehen sein. Die Seitenäste eines am oberen Ende der Lenksäule 4 angebrachten Lenkers 26 sind dabei, wie aus Fig. 9 hervorgeht, zweckmäßig abklappbar, so dass der zusammengeklappte Roller komplett im Köcher 24 verstaut werden kann. Der Lenker 24 soll dabei im abgeklappten Zustand nicht über die Breite des Trittbretts 5 hinausragen.

Das Riegelelement 15 kann, wie schon erwähnt, als aus Metall, wie Aluminium oder dergleichen hergestellter Abschnitt seiner Profilschiene ausgebildet sein. Die Laschenanordnung 8 kann an die Lagerbüchse 3 angeformt sein, und besteht daher aus demselben Material wie diese, in der Regel aus Metall. Dasselbe gilt für die Gabelanordnung 10, die an das Trittbrett 5 angeformt sein kann und daher aus demselben Material wie dieses besteht.

Vorstehend ist zwar ein bevorzugtes Ausführungsbeispiel der Erfindung näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung an die Verhältnisse des Einzelfalls anzupassen.

## Patentansprüche

1. Scharniergelenk zum Verbinden von zwei um eine Schwenkachse gegeneinander klappbaren Bauteilen, insbesondere eines Trittbretts (5) und einer Lenksäule (4) eines Rollers, die mit ineinander eingreifenden Gelenkelementen versehen sind, die durch einen sie durchgreifenden, die Schwenkachse bildenden Lagerbolzen (7) schwenkbar aneinander angelenkt und durch ein zugeordnetes, manuell auslösbares Sperrschloss (14) in zwei Endpsitionen gegeneinander verriegelbar sind, wobei eines der Gelenkelemente durch eine Laschenanordnung (8) gebildet ist, die mit einem zur Schwenkachse konzentrischen Bogenschlitz (11) versehen ist, in den ein schwenkachsparalleler Führungsstift (12) des jeweils anderen Gelenkelements eingreift und **dadurch gekennzeichnet, dass** zur Bildung des Sperrschlosses (14) ein auf der Laschenanordnung (8) des einen Gelenkelements um eine schwenkachsparallele Kippachse schwenkbares Riegelelement (15) vorgesehen ist, das ebenfalls einen zur Schwenkachse der beiden Gelenkelemente konzentrischen, mit dem Führungsstift (12) zusammenwirkenden Bogenschlitz (18) aufweist, der durch den Endpositionen der beiden gegeneinander klappbaren Bauteile zugeordnete, konzentrisch zur Kippachse des Riegelelements (15) gebogene, und bezüglich der Kippachse gleichsinnig gerichtete Fangtaschen (19, 20) verlängert ist und der mit einer entgegen dem Drehsinn der Fangtaschen (19, 20) wirksamen Einrückeinrichtung zusammenwirkt.

2. Scharniergelenk nach Anspruch 1, **dadurch gekennzeichnet, dass** der Bogenwinkel des Bogenschlitzes (11) der Laschenanordnung (8) sowie des Bogenschlitzes (18) des Riegelelements (15) dem Schwenkwinkel der beiden gegeneinander klappbaren Bauteile entspricht und dass eine durch die Kippachse des Riegelelements (15) und den Führungsstift (12) in jeder der beiden Endstellungen jeweils definierte Ebene senkrecht auf einer durch die Schwenkachse der beiden Gelenkelemente und die Achse des Führungsstifts (12) definierten Ebene steht.

3. Scharniergelenk nach Anspruch 2, **dadurch gekennzeichnet, dass** die Zentren der die Fangtaschen (19, 20) des Bogenschlitzes (118) des Riegelelements (15) mit der Kippachse des Riegelelements (15) einen rechten Winkel bilden.

4. Scharniergelenk nach einem der vorhergehenden Ansprüche, **dadurch gekennzeichnet, dass** die das eine Gelenkelement bildende Laschenanordnung (8) zwei parallele, von der Schwenkachse der beiden Gelenkelemente rechtwinklig gequerte Laschen (8 a, b) aufweist, zwischen die das Riegelelement (15) einsetzbar ist.

5. Scharniergelenk nach einem der vorhergehenden Ansprüche, **dadurch gekennzeichnet, dass** das mit der Laschenanordnung (8) zusammenwirkende, weitere Gelenkelement als zweischenklige Gabelanordnung (10) ausgebildet ist, welche die Laschenanordnung (8) umgreift und auf der der Führungsstift (12) aufgenommen ist.

6. Scharniergelenk nach einem der vorhergehenden Ansprüche, **dadurch gekennzeichnet, dass** bei einem Roller die Laschenanordnung (8) von einer den unteren Endbereich der Lenksäule (4) aufnehmenden Lagerbüchse (3) absteht.

7. Scharniergelenk nach einem der vorhergehenden Ansprüche, **dadurch gekennzeichnet, dass** bei einem Roller der vordere Endbereich des Trittbretts (5) als Gabelanordnung (10) ausgebildet ist.

8. Scharniergelenk nach einem der vorhergehenden Ansprüche, **dadurch gekennzeichnet, dass** der Abstand (a) einer durch die Schwenkachse der beiden Gelenkelemente und die Achse des Führungsstifts (12) definierten Ebene von der Oberseite des den Führungsstift (12) enthaltenden Bauteils dem Abstand (a) der Schwenkachse von der benachbarten Oberseite des anderen Bauteils entspricht.

9. Scharniergelenk nach einem der vorhergehenden Ansprüche, **dadurch gekennzeichnet, dass** die Einrückeinrichtung durch eine dem Riegelelement (15) zugeordnete, auf der Laschenanordnung (8) vorgesehene Einrückfeder (21) gebildet ist.

10. Scharniergelenk nach Anspruch 9, **dadurch gekennzeichnet, dass** die Einrückfeder (21) als auf einem die Kippachse des Riegelelements (15) bildenden Lagerstift (17) aufgenommene, vorzugsweise als Schenkelfeder ausgebildete Torsionsfeder ausgebildet ist.

11. Scharniergelenk nach einem der vorhergehenden Ansprüche, **dadurch gekennzeichnet, dass** das Riegelelement (15) mit einem nach oben vorspringenden, manuell erfassbaren Betätigungselement (23) versehen ist.

12. Scharniergelenk nach einem der vorhergehenden Ansprüche, **dadurch gekennzeichnet, dass** das Riegelelement (15) als aus Metall vorzugsweise Leichtmetall bestehender Profilabschnitt ausgebildet ist.

## Claims

1. A hinge joint for connecting two components, in particular a foot board (5) and a steering column (4) of a scooter, which are foldable against each other about a swivel axis, such components being provided with mutually engaging joint elements which are swivellably linked to each other by a bearing pin (7) reaching through the said joint elements and forming the swivel axis, and which are lockable in two end positions by an associated manually releasable lock (14), with one of the joint components being formed by a latch arrangement (8) which is provided with a bow slot (11) concentric relative to the swivel axis, in which bow slot (11) engages a guide pin (12) of the other joint element, such guide pin (12) being parallel to the swivel axis and **characterized in that** for the purpose of forming a lock (14) a locking element (15) is provided on the latch arrangement (8) of the one joint element, which is tiltable about a tilt axis parallel to the swivel axis, such locking element (15) likewise exhibiting a bow slot (18) which is concentric relative to the swivel axis of the two joint elements and acting together with the guide pin (12), such bow slot (18) being extended by catching pockets (19, 20) associated with the end positions of the two mutually foldable components concentrically bent towards the tilt axis of the locking element (15) and directed in the same direction relative to the tilt axis, and acting together with an engaging device acting against the direction of rotation of the catching pockets (19, 20).

2. A hinge joint in accordance with claim 1, **characterized in that** the bow angle of the bow slot (11) of the latch arrangement (8) as well as of the bow slot (18) of the locking element (15) corresponds to the swivel angle of the two mutually foldable components and that one plane defined by the tilt axis of the locking element (15) and the guide pin (12) in each one of the two end positions stands vertically on a plane defined by the swivel axis of the two joint elements and the axis of the guide pin (12).

3. A hinge joint in accordance with claim 2, **characterized in that** the centres of the catching pockets (19, 20) of the bow slot (18) form a rectangular angle with the tilt axis of the locking element (15).

4. A hinge joint in accordance with any of the preceding claims, **characterized in that** the latch arrangement (8) forming the one joint element exhibits two parallel latches (8a, b) perpendicularly crossed by the swivel axis of the two joint elements in between which the locking element (15) is insertable.

5. A hinge joint in accordance with any of the preceding claims, **characterized in that** the further joint element acting together with the latch arrangement (8) is designed as a two leg fork arrangement (10) encompassing the latch arrangement (8) and on which the guide pin (12) is received.

6. A hinge joint in accordance with any of the preceding claims, **characterized in that** the latch arrangement (8) in the case of a scooter protrudes from a guide bush (3) receiving the bottom end region of the steering column (4).

7. A hinge joint in accordance with any of the preceding claims, **characterized in that** the front end region of the foot board (5) in the case of a scooter is designed as fork arrangement (10).

8. A hinge joint in accordance with any of the preceding claims, **characterized in that** the distance (a) of a plane defined by the swivel axis of the two joint elements and the axis of the guide pin (12) from the bottom side of the component receiving the guide pin (12) corresponds to the distance (a) of the swivel axis of the neighbouring top side of the other component.

9. A hinge joint in accordance with any of the preceding claims, **characterized in that** the engaging device is formed by an engaging spring (21) associated with the locking element (15) and provided on the latch arrangement (8).

10. A hinge joint in accordance with claim 9, **characterized in that** the engaging spring (21) is designed as a torsion spring received on a guide pin (17) forming the tilt axis of the locking element (15) and preferably designed as a leg spring.

11. A hinge joint in accordance with any of the preceding claims, **characterized in that** the locking element (15) is provided with an actuating element (23) protruding upwards which can be manually gripped.

12. A hinge joint in accordance with any of the preceding claims, **characterized in that** the locking element (15) is designed as a profile section consisting of metal, preferably of light metal.

## Revendications

1. Articulation à charnière destinée à relier deux composants rabattables l'un contre l'autre autour d'un axe de pivotement, en particulier un marchepied (5) et une colonne de direction (4) d'un scooter, qui sont pourvus d'éléments d'articulation qui s'engagent l'un dans l'autre et qui sont articulés à pivotement l'un sur l'autre par un boulon d'appui (7) qui les traverse et forme l'axe de pivotement, et qui peuvent être verrouillés l'un contre l'autre dans deux positions finales au moyen d'une serrure de blocage (14) associée apte à être libérée manuellement, l'un des éléments d'articulation étant formé par un ensemble de languettes (8) qui est pourvu d'une fente arquée (11) concentrique à l'axe de pivotement, dans laquelle s'engage une broche de guidage (12) parallèle à l'axe de pivotement de l'autre élément d'articulation respectif, et **caractérisée par le fait que**, pour former ladite serrure de blocage (14), un élément de verrouillage (15) est prévu qui peut pivoter autour d'un axe de basculement parallèle à l'axe de pivotement sur ledit ensemble de languettes (8) dudit un élément d'articulation et qui présente, lui aussi, une fente arquée (18) qui est concentrique à l'axe de pivotement des deux éléments d'articulation et agit de concert avec la broche de guidage (12) et qui est allongée par des poches d'arrêt (19, 20) associées aux positions finales des deux composants rabattables l'un contre l'autre, arquées concentriquement à l'axe de basculement de l'élément de verrouillage (15) et dirigées dans le même sens par rapport à l'axe de basculement, et qui agit de concert avec un dispositif d'engagement efficace contre le sens de rotation des poches d'arrêt (19, 20)

2. Articulation à charnière selon la revendication 1, **caractérisée par le fait que** l'angle d'arc de la fente arquée (11) de l'ensemble de languettes (8) ainsi que de la fente arquée (18) de l'élément de verrouillage (15) correspond à l'angle de pivotement des deux composants rabattables l'un contre l'autre et qu'un plan défini respectivement par l'axe de basculement de l'élément de verrouillage (15) et la broche de guidage (12) dans chacune des deux positions finales est perpendiculaire à un plan défini par l'axe de pivotement des deux éléments d'articulation et l'axe de la broche de guidage (12).

3. Articulation à charnière selon la revendication 2, **caractérisée par le fait que** les centres des poches d'arrêt (19, 20) de la fente arquée (118) de l'élément de verrouillage (15) forment un angle droit avec l'axe de basculement de l'élément de verrouillage (15).

4. Articulation à charnière selon l'une quelconque des revendications précédentes, **caractérisée par le fait que** ledit ensemble de languettes (8) formant l'un des éléments d'articulation comprend deux languettes (8a, b) parallèles qui sont croisées à angle droit par l'axe de pivotement des deux éléments d'articulation et entre lesquelles peut être inséré l'élément de verrouillage (15).

5. Articulation à charnière selon l'une quelconque des revendications précédentes, **caractérisée par le fait que** l'autre élément d'articulation agissant de concert avec l'ensemble de languettes (8) est réalisé en tant qu'ensemble de fourche (10) à deux branches qui s'engage autour de l'ensemble de languettes (8) et sur lequel est reçue la broche de guidage (12).

6. Articulation à charnière selon l'une quelconque des revendications précédentes, **caractérisée par le fait que**, dans le cas d'un scooter, ledit ensemble de languettes (8) fait saillie d'une douille de support (3) qui reçoit la zone d'extrémité inférieure de la colonne de direction (4).

7. Articulation à charnière selon l'une quelconque des revendications précédentes, **caractérisée par le fait que**, dans le cas d'un scooter, la zone d'extrémité avant du marchepied (5) est réalisée en tant qu'ensemble de fourche (10).

8. Articulation à charnière selon l'une quelconque des revendications précédentes, **caractérisée par le fait que** la distance (a) d'un plan défini par l'axe de pivotement des deux éléments d'articulation et l'axe de la broche de guidage (12), par rapport à la face supérieure du composant contenant la broche de guidage (12) correspond à la distance (a) de l'axe de pivotement par rapport à la face supérieure adjacente de l'autre composant.

9. Articulation à charnière selon l'une quelconque des revendications précédentes, **caractérisée par le fait que** le dispositif d'engagement est formé par un ressort d'engagement (21) qui est associé à l'élément de verrouillage (15) et est prévu sur l'ensemble de languettes (8).

10. Articulation à charnière selon la revendication 9, **caractérisée par le fait que** ledit ressort d'engagement (21) est réalisé en tant que ressort de torsion qui est reçu sur une broche de support (17) formant l'axe de basculement de l'élément de verrouillage (15) et qui, de préférence, est réalisé en tant que ressort à branches.

11. Articulation à charnière selon l'une quelconque des revendications précédentes, **caractérisée par le fait que** l'élément de verrouillage (15) est pourvu d'un élément d'actionnement (23) faisant saillie vers le haut et apte à être saisi manuellement.

12. Articulation à charnière selon l'une quelconque des revendications précédentes, **caractérisée par le fait que** l'élément de verrouillage (15) est réalisé en tant que section de profilé réalisée en métal, de préférence en métal léger.
